# EUROPÄISCHE PATENTSCHRIFT

(11) **EP 0 510 499 B1**
(45) Veröffentlichungstag und Bekanntmachung des Hinweises auf die Patenterteilung: **06.03.1996**
(21) Anmeldenummer: 92106472.1
(22) Anmeldetag: 15.04.1992
(51) Int. Cl.: B65G 45/20, A01F 15/07

(54) **Vorrichtung zum Verhindern eines Materialaufbaus**
Device for preventing accumulations of material
Dispositif pour empêcher une accumulation de matériau

(30) Priorität: 24.04.1991 DE 4113311
(43) Veröffentlichungstag der Anmeldung: 28.10.1992
(73) Patentinhaber: DEERE & COMPANY, Moline, Illinois 61265 (US)
(72) Erfinder: Viaud, Jean, F-57200 Sarreguemines (FR)
(74) Vertreter: Feldmann, Bernhard

(56) Entgegenhaltungen:
- EP-A- 0 201 898
- DE-C- 923 598
- FR-A- 2 575 362
- GB-A- 785 757
- US-A- 3 888 345

## Beschreibung

Die Erfindung betrifft eine Rundballenpresse mit mehreren parallel über Rollen verlaufenden Zugmitteln und einer antreibbaren Schnecke zum Befördern von Material, das von einer ihr benachbarten Rolle entfernt wurde.

Die EP-A1-0 201 898 zeigt eine Vorrichtung zum Verhindern eines Materialaufbaus in einer Rundballenpresse an einer Rolle, über die mehrere Riemen geführt sind. Diese Vorrichtung besteht aus einer Kratzleiste, wahlweise einer auf der Rolle angeordneten Spirale und einer Schnecke. Während mittels der Spirale das zu der Rolle strebende Material entlang deren Axialrichtung abgeführt werden soll, wird mittels der Kratzleiste dennoch von der Rolle erfaßtes Material abgestreift und mittels der Schnecke einer Öffnung zwischen den Riemen zugeführt, wo es entfallen kann.

Weiterhin ist es bekannt (Rundballenpresse der Firma Batlle, Spanien), eine Schnecke an einer Seite von Riemen entlangreiben zu lassen, um dort anhaftendes Material zu entfernen und zu einer Öffnung zu fördern.

Die vorgenannten Ausführungen weisen den Nachteil auf, daß sie entweder im Aufbau zu aufwendig sind, oder das zu entfernende Material nicht vollständig erfassen bzw. abführen.

Ferner gibt es Vorrichtungen zum Verhindern eines Materialaufbaus an Förderern in vielfältigen Ausführungen, die dort Anwendung finden, wo Material von einem sich bewegenden Teil erfaßt, mitgenommen und aufgewickelt wird, oder sich auf diesem ansetzt.

So zeigt die GB-A-2 023 525 eine in Drehung versetzte Schnecke und eine Rolle, zwischen denen ein Riementrum eines Kohle- oder Steinförderers hindurch verläuft. Die Riemenunterseite wird mittels der Rolle an der Außenkante der Windungen der Schnecke zur Anlage gebracht, so daß während des Hindurchlaufs des Förderers das an seiner Unterseite anhaftende Material in der Radialrichtung der Schnecke entfernt wird.

Im einzelnen beschreibt die GB-A-2 023 525 einen Förderer mit einer Schnecke, die an der Unterseite eines Förderbands entlangstreift, um diese von Kohle- oder Steingutrückständen zu reinigen. Derartige Rückstände sind nicht wickelfähig und haften nicht an einem Drehkörper, sondern an einem sich in diesem Bereich linear bewegenden Band.

Eine aus der EP-A1-0 201 898 hervorgehende Schnecke befindet sich zwar in unmittelbarer Nähe einer der Wickelgefahr unterliegenden Rolle; sie streift jedoch auf dieser aufgewickeltes Material nicht ab, sondern erfaßt es zum Zweck des Förderns, nachdem es mittels einer Kratzleiste von der Rolle getrennt worden ist.

Körniges und aufgrund von Feuchtigkeit zusammenhaftendes Gut ist nicht mit langfaserigem, festem, zähen und stengeligen Gut wie Gras, Stroh, Heu oder dergleichen vergleichbar, das ungleich schwerer von einer Rolle zu entfernen ist als z. B. Sand, Lehm, Ton, Kohle oder dergleichen.

Die der Erfindung zugrunde liegende Aufgabe wird darin gesehen, eine Vorrichtung zum Verhindern eines Materialaufbaus vorzuschlagen, die mit wenig Aufwand das anhaftende Gut sicher erfaßt und entfernt.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise werden die aus dem Stand der Technik bekannten Kratzleisten oder Gegendruckrollen vermieden, was zu einem einfacheren Aufbau führt. Das von der Rolle entfernte Material wird unmittelbar von der Schnecke erfaßt und von dieser bis zur Abgabe an einer geeigneten Stelle geführt.

Die Abstreif- und Förderintensität der Schnecke kann verändert werden, indem ihre Umfangsgeschwindigkeit gegenüber der Rolle erhöht oder verringert wird.

Erhebungen auf der Rolle im Bereich der Riemenlauffläche, die den Zugmittelgeradlauf stabilisieren oder einen Materialaufbau zwischen den Zugmitteln und der Rolle vermeiden sollen, hindern die Anwendung der Erfindung nicht, wenn das Mantelprofil der Schnecke an das der Rolle angepaßt ist.

Der Einbau einer erfindungsgemäßen Vorrichtung zum Verhindern eines Materialaufbaus in eine Ballenpresse, insbesondere in eine Rundballenpresse, stellt eine besonders vorteilhafte Verwendung dar, da dort aufgrund mancher Erntebedingungen Material dazu tendieren kann, sich um drehende und Riemen oder Ketten führende Rollen zu wickeln.

Sind die Zugmittel in der beschriebenen Weise zueinander versetzt über Rollen geführt, ergeben sich geeignete Stellen zur Abgabe des Materials, so daß es nicht erneut an der oder den Rollen anhaften kann.

Eine andere Möglichkeit der Materialabgabe ergibt sich, wenn die Schnecke(n) durch Öffnungen in den Seitenwänden hindurchreichen und das Material dort abgeben, so daß es möglicherweise wieder einer Aufnahmevorrichtung (Pick-up) zufällt.

In der Zeichnung ist ein nachfolgend näher beschriebenes Ausführungsbeispiel der Erfindung dargestellt.

Es zeigt:
- Fig. 1: einen vorderen Bereich eines Förderers mit einer erfindungsgemäßen Vorrichtung zum Verhindern eines Materialaufbaus an einer durchgehenden Rolle,
- Fig. 2a: die Vorrichtung nach Figur 1 in Verbindung mit einer einseitig gelagerten kurzen zylindrischen Rolle mit geradliniger Oberfläche und
- Fig. 2b: die Vorrichtung nach Figur 1 in Verbindung mit einer einseitig gelagerten kurzen zylindrischen Rolle mit einer abschnittsweise ballig ausgebildeten Oberfläche.

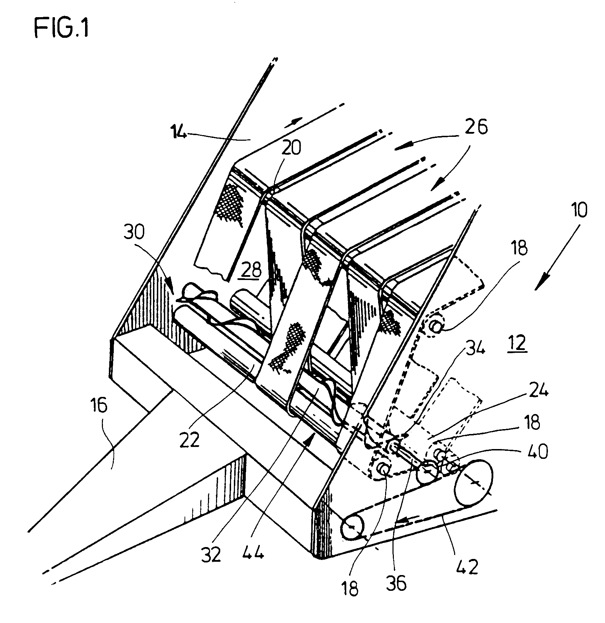

Ein in Figur 1 gezeigter Förderer 10 enthält eine linke und eine rechte Seitenwand 12 und 14, die von einem Rahmen 16 getragen werden. Zwischen den Seitenwänden 12, 14 erstrecken sich mehrere drehbare oder drehend angetriebene Rollen 18, von denen eine obere, eine vordere untere und eine rückwärtige untere Rolle 20, 22 und 24 gezeigt sind.

Über die Rollen 18 sind eine Vielzahl nebeneinander verlaufender Zugmittel 26 in der Form von Riemen beweglich geführt, die auf nicht gezeigte Weise zwischen Abschnitten ihrer Trums in dem Raum zwischen den Seitenwänden 12 und 14 einen Preßraum zum Verdichten von Material, nämlich Erntegut, umschließen. Anstatt der Riemen können Ketten, Bänder oder dergleichen vorgesehen sein.

Wie dies bereits aus der EP-A1-0 070 537 bekannt ist, ist ein Satz an Zugmitteln 26 über alle Rollen 18 geführt, während ein zweiter Satz an Zugmitteln 26 in dem in Figur 1 gezeigten Bereich nur über die obere und die untere rückwärtige Rolle 20 und 24 geführt ist. Auf diese Weise ergibt sich zwischen den Zugmitteln 26 der beiden Sätze senkrecht zu der Zugmittellauffläche eine keilförmige Öffnung 28.

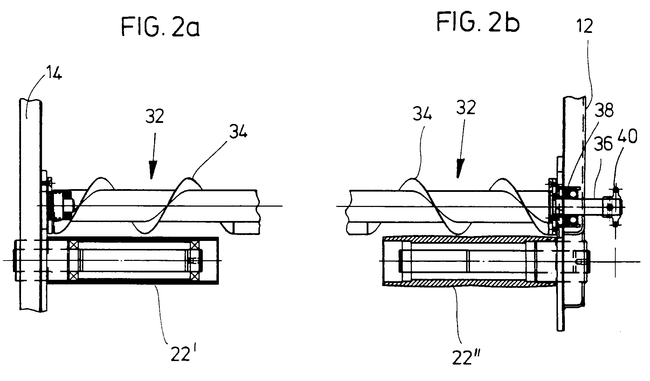

Die in den Figuren 2a und 2b gezeigten Rollen 22' und 22'' können anstelle der vorderen unteren Rolle 22 vorgesehen werden und nehmen den Satz Zugmittel 26 auf, der über alle Rollen 18 in dem in Figur 1 gezeigten Bereich verläuft, was bedeutet, daß die in Figur 1 gezeigte Zugmittelanordnung umgekehrt wird.

Die Rollen 22' und 22'' erstrecken sich jeweils nicht über den gesamten Abstand zwischen den beiden Seitenwänden 12, 14, sondern in freitragender Weise nur soweit von der jeweiligen Seitenwand 12, 14 weg, wie es erforderlich ist, um die Zugmittel 26 des ihr zugeordneten Satzes tragen zu können.

Die Ausführungen nach den Figuren 2a und 2b unterscheiden sich dadurch, daß die Rolle 22' aus Figur 2a eine zylindrische Mantelfläche mit geradliniger Oberfläche aufweist, während diejenige nach Figur 2b eine zwar zylindrische, aber im Bereich der Zugmittellauffläche ballig ausgebildete Mantelfläche aufweist.

Eine erfindungsgemäße Vorrichtung 30 zum Verhindern des Materialaufbaus enthält eine Schnecke 32 und ist im Zusammenwirken mit der Rolle 22 bzw. den Rollen 22' und 22'' in allen Figuren gezeigt.

Die Schnecke 32 erstreckt sich bei diesem Ausführungsbeispiel sowohl bei der Rolle 22 wie auch bei den Rollen 22' und 22'' über die gesamte Strecke zwischen den beiden Seitenwänden 12 und 14 und weist auf ihrer gesamten Länge Schneckenwindungen 34 auf.

Es ist jedoch auch möglich, die Schnecke 32 ebenfalls als Stummelschnecke auszubilden, die sich beispielsweise nur über die Länge der kurzen Rollen 22' und 22'' erstreckt. Außerdem wäre es möglich, die Schneckenwindungen 34 der Schnecke 32 nicht über die gesamte Länge einer sich zwischen den Seitenwänden 12, 14 erstreckenden Schnecke vorzusehen, sondern nur abschnittsweise.

Die Schnecke 32 tritt mit einer Schneckenwelle 36 durch eine Öffnung 38 in der linken Seitenwand 12 nach außen und trägt dort drehfest ein Antriebsrad 40. Das Antriebsrad 40 kämmt mit einer Antriebskette 42, die einen in diesem Fall von der unteren rückwärtigen Rolle 24 abgenommenen Antrieb in die Schnecke 32 einleitet. Demnach wird die Schnecke 32 stets in Drehung versetzt, wenn die Zugmittel 26 umlaufen und infolgedessen auch die Rolle 24 dreht.

Wahlweise kann sich die Schnecke 32 auch mit ihren Schneckenwindungen 34 durch die Seitenwände 12, 14 hindurch erstrecken, wozu geeignete Öffnungen vorgesehen sind.

Die Schnecke 32 ist so angeordnet, daß die Außenkanten ihrer Schneckenwindungen 34 nahezu in Kontakt mit der Oberfläche der unteren vorderen Rolle 22 geraten. Der verbleibende Spalt sollte so gering wie möglich gehalten werden. Jedenfalls darf der Abstand zwischen den Schneckenwindungen 34 und der Rolle 22, 22', 22'' nicht so groß sein, daß Material, das dazu tendiert, sich um die Rolle 22, 22', 22'' zu wickeln, nicht mehr erfaßt wird. Es ist zu erkennen, daß Material, z. B. Gras, Stroh, Heu oder dergleichen, das auf beliebige Weise an den Rollen 22, 22' oder 22'' haften bleibt und mit umlaufen möchte, von den Schneckenwindungen 34 erfaßt und entlang ihrer Drehachse gefördert wird.

Aus Figur 1 ist zu entnehmen, daß sich die Schnecke 32 durch die keilförmigen Öffnungen 28 erstreckt. In dem Bereich zwischen zwei keilförmigen Öffnungen 28 ergibt sich ein nach unten offener Fallraum 44, durch den das von der Schnecke 32 entfernte Material aus dem Zugmittel-Rollen-Bereich entweichen kann.

Die Drehrichtung der Schnecke 32 und die Steigungsrichtung der auf ihr befindlichen Schneckenwindungen 34 ist so gewählt, daß das von ihr von der Oberfläche der Rolle 22, oder 22' oder 22'' entfernte Material zu den Fallräumen 44 gefördert wird. Es ist - je nach Lage der Abgabestellen - auch möglich bzw. erforderlich, die Schneckenwindungen 34 mit unterschiedlicher Steigungsrichtung auf einer Schneckenwelle 36 vorzusehen.

Es wäre auch möglich, die Zugmittel 26 nicht zueinander versetzt anzuordnen, sondern in den Seitenwänden 12, 14 große Öffnungen vorzusehen, zu denen das Material gefördert und nach draußen abgegeben wird.

Ist die nur einseitig gelagerte Rolle 22'' gemäß Figur 2b ausgebildet, d. h. im Zugmittellaufbereich ballig, wird auch die radiale Abmessung der Schneckenwindungen 34 dieser Außenform angepaßt, so daß beim Umlaufen der Rolle 22'' und der Schnecke 32 stets der gewünschte kleinstmögliche Spalt zwischen der Außenkante der Schneckenwindungen 34 und der Oberfläche der Rolle 22'' gewahrt bleibt; in diesem Fall ist auf eine genaue Synchronisation der Drehbewegungen der Schnecke 32 und der Rolle 22'' zu achten.

Die ballige Ausbildung der Oberfläche im Zugmittellaufbereich kann auch auf der durchgehenden Rolle 22 vorgesehen werden.

Nach alledem ist zu erkennen, daß die Schnecke 32 auf der Rolle 22, 22' oder 22'' anhängendes Material abstreift und es in Axialrichtung zu einer Öffnung 38 zwischen unterschiedlich geführten Sätzen von Zugmitteln 26 oder in den Seitenwänden 12, 14 fördert, wo es entfallen kann.

## Patentansprüche

1. Rundballenpresse mit mehreren parallel über Rollen (22, 22', 22'') verlaufenden Zugmitteln (26) und einer antreibbaren Schnecke (32) zum Befördern von Material, das von einer ihr nahegelegenen Rolle (22, 22', 22'') entfernt wurde, dadurch gekennzeichnet, daß die Schnecke (32) derart in unmittelbarer Nähe der Rolle (22, 22', 22'') angeordnet ist, daß sie mit dieser umlaufendes Material, z. B. Gras, Stroh, Heu oder dergleichen von ihr trennt und entfernt.

2. Vorrichtung nach Anspruch 1, dadurch gekennzeichnet, daß die Rolle (22, 22', 22'') und die Schnecke (32) mit unterschiedlichen Umfangsgeschwindigkeiten angetrieben werden.

3. Vorrichtung nach Anspruch 1, dadurch gekennzeichnet, daß auf der Mantelfläche der Rolle (22'') Erhöhungen vorgesehen sind und das Mantelprofil der Schnecke (32) an das der Rolle (22'') angepaßt ist.

4. Ballenpresse, insbesondere Rundballenpresse, mit mehreren parallel zueinander über Rollen (22, 22', 22'') verlaufenden Zugmitteln (26), gekennzeichnet durch wenigstens eine Vorrichtung nach den Ansprüchen 1 bis 3 an wenigstens einer der Rollen (22, 22', 22'').

5. Ballenpresse nach Anspruch 4, dadurch gekennzeichnet, daß ein Satz der Zugmittel (26) eine mittlere Rolle (22, 22', 22'') von drei nicht auf einer Geraden liegenden Rollen (20, 22, 24) überspringt und sich somit eine Öffnung (28) senkrecht zu der Zugmittellauffläche zwischen dem einen Satz und einem verbleibenden Satz von Zugmitteln (26) ergibt, zu der die Schnecke (32) fördert.

6. Ballenpresse nach Anspruch 4 oder 5, dadurch gekennzeichnet, daß die Schnecke(n) (32) durch eine bzw. beide Seitenwände (12, 14) der Ballenpresse geführt ist (sind).

## Claims

1. A round baler with a plurality of parallel means (26) acting in tension running over rollers (22, 22', 22'') and a drivable auger (32) for conveying material, which is separated from a roller (22, 22', 22'') adjacent thereto, characterized in that the auger (32) is so arranged in the immediate vicinity of the roller (22, 22', 22'') that it separates therefrom and removes material, e.g. grass, straw, hay or the like, revolving with the roller.

2. Apparatus according to claim 1, characterized in that the roller (22, 22', 22'') and the auger (32) are driven with different peripheral speeds.

3. Apparatus according to claim 1, characterized in that protrusions are provided on the circumferential surface of the roller (22'') and the circumferential profile of the auger (32) is matched to that of the roller (22'').

4. A baler, especially a round baler, with a plurality of means (26) acting in tension parallel to one another and running over rollers (22, 22', 22''), characterized by at least one apparatus according to claims 1 to 3 on at least one of the rollers (22, 22', 22'').

5. A baler according to claim 4, characterized In that one set of means (26) acting in tension bypasses a middle roller (22, 22', 22'') of three rollers (20, 22, 24) which do not lie on a line, so that a opening (28) results perpendicular to the running surface of the means acting in tension between the one set and a remaining set of means (26) acting in tension, to which opening the auger (32) feeds.

6. A baler according to claim 4 or 5, characterized in that the auger(s) (32) is or are passed through one or both of the sidewalls (12, 14) of the baler.

## Revendications

1. Presse à balles cylindriques comportant plusieurs moyens de traction (26) qui circulent parallèlement sur des rouleaux (22,22',22'') et une vis pouvant être entraînée (32) servant à entrainer une matière, qui a été retirée d'un rouleau (22,22',22'') proche de cette vis, caractérisée en ce que la vis (32) est disposée à proximité immédiate du rouleau (22,22',22'') de telle sorte qu'elle sépare et retire de ce rouleau la matière tournant avec ce dernier, par exemple de l'herbe, de la paille, du foin ou analogue.

2. Dispositif selon la revendication 1, caractérisé en ce que le rouleau (22,22',22'') et la vis (32) sont entraînés avec des vitesses circonférentielles différentes.

3. Dispositif selon la revendication 1, caractérisé en ce que des bossages sont prévus sur la surface enveloppe du rouleau (22'') et que le profil de l'enveloppe de la vis (32) est adapté à celui du rouleau (22'').

4. Presse à balles, notamment presse à balles cylindriques, comprenant plusieurs moyens de traction (26) circulant en parallèle sur des rouleaux (22,22',22''), caractérisée par au moins un dispositif selon les revendications 1 à 3, installé sur au moins l'un des roulaux (22,22',22'').

5. Presse à balles selon la revendication 4, caractérisée en ce qu'un ensemble des moyens de traction (26) ne passe pas sur un rouleau médian (22,22',22'') faisant partie de trois rouleaux (20,22,24) non situés sur une droite et qu'il se forme par conséquent perpendiculairement à la surface de circulation des moyens de traction entre un ensemble et un ensemble restant de moyens de traction (26), une ouverture (28) en direction de laquelle la vis (32) effectue son entraînement.

6. Presse à balles selon la revendication 4 ou 5, caractérisée en ce que la ou les vis (32) s'étendent à travers l'une des deux parois ou les deux parois (12,14) de la presse à balles.
